**Europäisches Patentamt**

**European Patent Office**

**Office européen des brevets**

(19)

(11) Veröffentlichungsnummer: **0 035 961**

**A1**

(12) ## EUROPÄISCHE PATENTANMELDUNG

(21) Anmeldenummer: **81810031.5**

(22) Anmeldetag: **03.02.81**

(51) Int. Cl.³: **B 63 C 11/02**

(30) Priorität: **01.03.80 CH 1605'80**

(43) Veröffentlichungstag der Anmeldung:
**16.09.81 Patentblatt 81/37**

(84) Benannte Vertragsstaaten:
**DE FR GB IT**

(71) Anmelder: **Gross, Pavel, Dipl Ing.**
**Hintertrottenstrasse 280**
**CH-5236 Remigen(CH)**

(71) Anmelder: **Kohout, Jaroslav**
**Erbslet 373**
**CH-5234 Villigen(CH)**

(72) Erfinder: **Gross, Pavel, Dipl Ing.**
**Hintertrottenstrasse 280**
**CH-5236 Remigen(CH)**

(72) Erfinder: **Kohout, Jaroslav**
**Erbslet 373**
**CH-5234 Villigen(CH)**

(74) Vertreter: **Feldmann, Clarence Paul et al,**
**c o Patentanwaltsbüro FELDMANN AG Postfach**
**Kanalstrasse 17**
**CH-8152 Glattbrugg(CH)**

(54) **Dekompressionsluftvorrat-Anzeiger für Taucher.**

(57) Der Anzeiger weist in einem druckfesten Gehäuse (10) ein über den Druckschlauch (26) an das Tauchgerät angeschlossene Bourdon-Feder (19) auf. Die Bewegungen der Bourdon-Feder sind über den Hebel (20), den Faden (21), die Kurvenscheibe (14) und die Achse (17) auf den Doppelzeiger (15) übertragen. Dieses zeigt dann den Druckin der Flasche des Tauchgerätes nicht linear an. Durch das Ankoppeln an ein Dekompressionsmeter wird der für die Durchführung der Dekompression notwendige Flaschendruck auf der Skala (13) angezeigt.

Fig. 4.

-1-

Dipl.Ing. Pavel Gross, CH-5236 Remigen, Schweiz
Jaroslav Kohout, CH-5234 Villigen, Schweiz

Dekompressionsluftvorrat-Anzeiger für Taucher

Die Erfindung betrifft einen Dekompressionsluftvorrat-Anzeiger für Taucher, der durch erweitern der Funktion des bestehenden mechanischen Dekompressionsmeters entsteht.

Das Prinzip des Dekompressionsmeter ist bekannt. Besonders verbreitet ist das mechanisch arbeitende System mit zwei, durch ein Drossel verbundenen Behälter, und mit einer Analog Anzeige. Die bis jetzt bekannten mechanischen Systeme geben nur die Tiefe der notwendigen Dekompressionsstufe an, Zeitabhängig, aber ohne ablesbare Zeitangabe über Dauer der Dekompression und ohne zusätzliche Information über den für die Dekompression notwendigen Luftvorrat.

Der Erfindung liegt die Aufgabe zugrunde, die bisherigen Angaben der Dekompressionsstufe um die Angabe, des für die Durchführung der ganzen Dekompression nötigen Luftvorrates und Zeitverlaufes der Dekompression, zu erweitern. Diese zusätzlichen Angaben in der Form einer Zusatzskala realisiert, ermöglichen es dem Taucher ohne kompliziertes Berechnen oder Abschätzen den genauen Zeitpunkt der Beendung des Tauchganges und Anfang der Dekompression abzulesen und den Dekompressions-Vorgang besser überwachen zu können. Die Kombination der Zusatzskala mit dem Dekompressionsmeter ergibt den Dekompressionsluftvorrat-Anzeiger. Weitere Aufgabe der Erfindung ist die Bildung eines kombinierten Dekompressionsluftvorrat-Anzeigers, der durch eine Integrierung des Druckluftmanometers, der Zusatzskala und des Dekompressionsmeters entsteht.

Erfindungsgemäs wird dies dadurch erreicht, dass eine bestehende Dekompressions-Skala des mechanischen Dekompressionsmeters mit einer zusätzlichen, vom Dekompressions-Vorgang abhängigen, vorausberechneten Druckluftvorrat-Skala erweitert ist, die für jede Lage der Dekompressions-Anzeige den, für die Durchführung der Dekompression notwendigen, Flaschendruck angibt.

Die Druckluftvorrat-Skala kann aus mehreren Skalen für verschiedene Atemgerät-Flascheninhalte bestehen, eine Zeitskala haben und Korrektur-Konstanten für Memory Zone enthalten. Die auf dem Dekompressionsmeter zusätzlich montierbare Druckluftvorratskala kann vorzugsweise als ein aufklebbares Schild mit manuell drehbarem Zeiger ausgeführt
werden. Durch die Koppelung des Dekompressionsmeters, der
Druckluftvorratskala und dieser Skala angepassten nicht linearen Manometer, in die Einheit, entsteht ein kombinierter
Dekompressionsluftvorrat-Anzeiger kompakter Bauweise.

Im folgenden wird anhand der graphischen Darstellung das
Prinzip der Druckluftvorrat-Skala beschrieben und anhand der
Zeichnungen die Ausführungs-Beispiele der Erfindung näher
gezeigt.

Fig. 1 Graphische Darstellung zum Beschrieb des Prinzips
        der Druckluftvorratskala.

Fig. 2 Zusätzliche Druckluftvorrat- und Zeitskala als
        Schild ausgeführt.

Fig. 3 Schnitt durch die Druckluftvorrat-Skala.

Fig. 4 Kombinierter Dekompressionsluftvorrat-Anzeiger.

Fig. 5 Kombinierter Dekompressionsluftvorrat-Anzeiger
        im Schnitt.

Fig. 6,7 Kombinierter Dekompressionsluftvorrat-Anzeiger mit
        geradem Weg der Dekompressions-Anzeige.

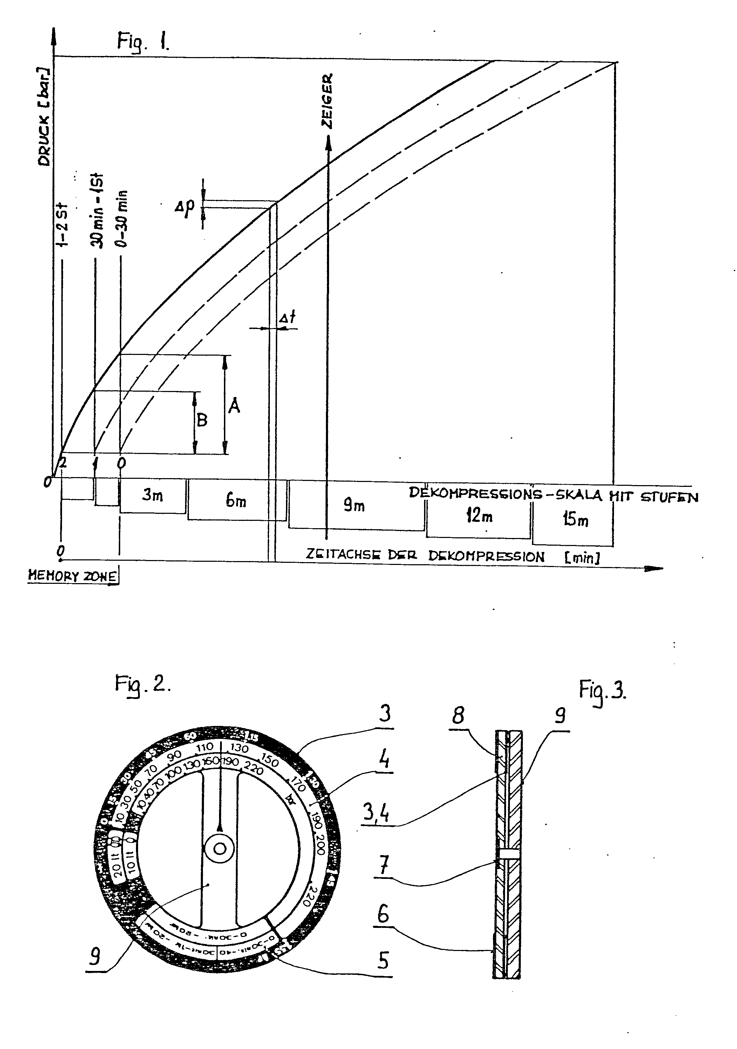

Aus dem physikalischen Prinzip des bekannten mechanischen
Dekompressionsmeters mit Zeiger geht hervor, dass zu der
Skala der Dekompressionsstufen eine von ihr abhängige
Zeitskala parallel angeordnet werden kann, die für jede Lage
des Zeigers des Dekompressionsmeters eine entsprechende
Dekompressionszeit angibt, wie aus der linear gezeichneten Skala in der graphischen Darstellung (Fig.1)
ersichtlich. Mit Hilfe der Zeitskala kann auch eine Kurve ermittelt werden, die für jede Lage des Zeigers den
für die Dekompression notwendigen Flaschendruck angibt.
Diese Druckluftvorrat-Kurve kann wie folgt errechnet
werden: Zu jeder Zeitdifferenz $\Delta t$ auf der Zeitskala kann
eine Drucksenkung $\Delta p$ ausgerechnet werden, wenn ein durchschnittlicher Atemluftverbrauch Q angenommen wird.

$$\Delta p = \frac{\Delta t \cdot Q \cdot h}{V}$$

Wobei: $\Delta p$ = Drucksenkung des Luftvorrates in der Atemgerätflasche [bar]

$\Delta t$ = beliebige Zeitdifferenz [min]

Q = Durchschnittlicher Atemluftverbrauch [l/min]

h = Absoluter Wasserdruck in der entsprechenden
   Dekompressionsstufe [bar]

V = Gesamter Flascheninhalt des Atmungsgerätes [l]

Die Zeitskala (Zeitachse) kann auf beliebige Mengen $\Delta t$
geteilt und die entsprechenden errechneten $\Delta p$ integriert
werden, so dass die Druckluftvorrat-Kurve entsteht, die
für jeden Flascheninhalt des Tauchgeräts typisch ist.
Aus dieser Druckluftvorrat-Kurve kann wieder eine Druckluftvorrat-Skala mit Zahlen entnommen werden. Die Zeit-
und Druckluftvorrat-Skala können zu der Dekompressions-
Skala zugeordnet werden, so dass der Dekompressions-
Zeiger bei jeder beliebigen Lage nicht nur den Verlauf der Dekompression angibt, sondern auch den Luftvorrat
der für die Durchführung der ganzen Dekompression notwendig ist, sowie die dazu benötigte Zeit. Bei den am
meisten benützten Dekompressionsmeter vom hier erwähnten
Typ werden sogenannte Memory Zone verwendet. Wenn der
Aufenthalt unter Wasser mehr als 30 min bis 1 Stunde
dauert, endet die Dekompression nicht beim Punkt 0 (Fig.1),
sondern beim Punkt 1. Falls der Aufenthalt 1 bis 2 Stunden dauert, endet die Dekompression erst beim Punkt 2.
Dies ist auch für wiederholte Tauchgänge anwendbar. Um
diese Memory Zone mit der Druckluftvorrat-Skala koppeln
zu können, gibt es im Prinzip zwei Möglichkeiten: entweder werden drei Flaschendruck-Skalen benützt von denen
jede im entsprechendem Punkt 0,1,2 endet (gestrichelt in
der Fig. 1) und jede für einen anderen Aufenthalt unter
Wasser bestimmt ist, oder es wird nur die Skala die im
Punkt 2 endet, benützt, die dann etwas sicherer wird.
Diese Lösung ist einfach und kann bei bestimmter Uebung
wie folgt korrigiert werden: Alle drei Kurven 0,1,2 sind
Parallel. Wenn der Zeiger Punkt 0 anzeigt, bei unter
30 min Aufenthalt unter Wasser, hätte der Taucher noch
A Luftvorrat. Dieser A Wert ist eine konstante Zahl und
kann bei jeder Lage des Zeigers nach Erwägung der Aufenthaltsdauer abgezogen werden. Genauso geht es beim Punkt
1 mit der Konstante B. Beide Konstanten sind bei den
Skalen aufgeschrieben. Die Korrekturen mit den Konstanten
A und B sind nicht notwendig und dienen nur zur besseren
Ausnützung des Luftvorrates.

(Fig. 2 und 3) zeigen eine zusätzliche Druckluftvorrat-
und Zeitskala, die aus einem aufklebbaren Schild ausgeführt ist. Auf der Acrylglasscheibe 8 mit der aufgetragenen Zeitskala 3 und Druckluftvorrat-Skala 4 für die
Tauchgeräte mit 20 l und 10 l Flascheninhalt, mit den
Korrekturkonstanten A und B Pos.5, ist ein selbstklebender Streifen 6 angebracht,der zum Aufkleben auf den
bestehenden Dekompressionsmeter dient. Auf der Achse 7
ist die drehbare Acrylglasscheibe 9 mit dem Doppelzeiger
befestigt, der einen Parallax-Fehler beim Ablesen ausschliesst.

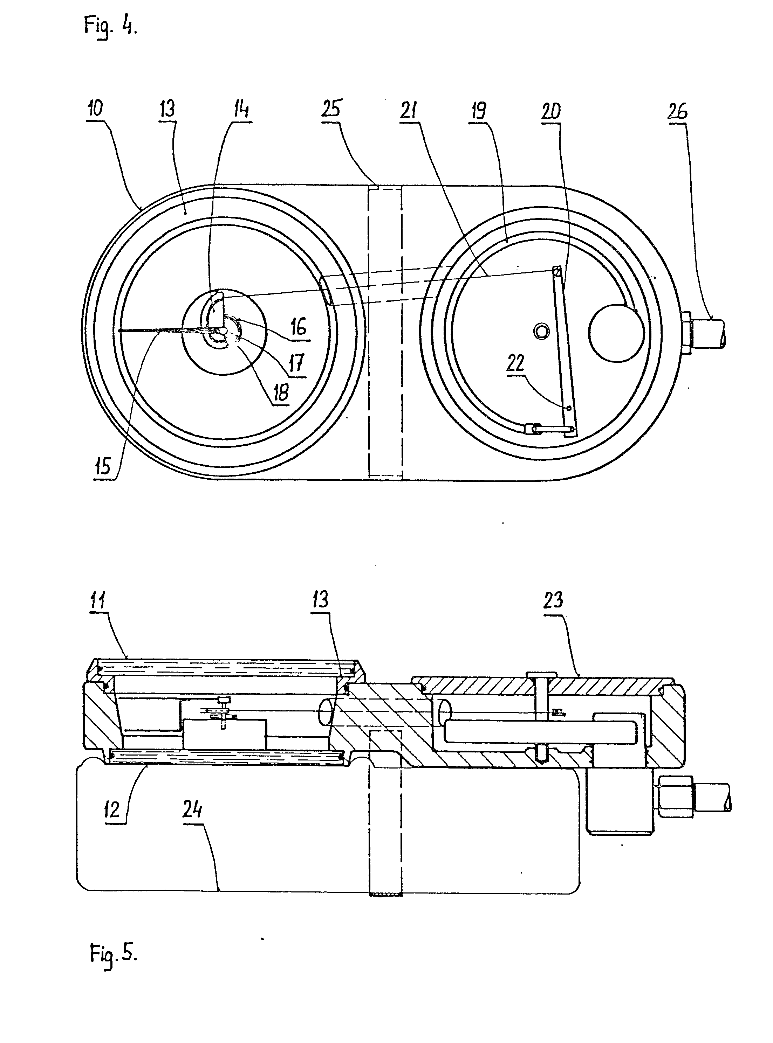

Der kombinierte Dekompressionsluftvorrat-Anzeiger ist
eine Koppelung des Dekompressionsmeters, der Druckluftvorrat- und Zeitskala mit dem nichtlinearen, der Skala
angepassten Druckluftvorrat-Manometer (Fig. 4,5) und
besteht aus einem Gehäuse 10 das mit den Fenstern 11 und
12 und dem Deckel 23 wasserdicht abgeschlossen ist. Der
Mechanismus besteht aus einer Bourdon-Feder 19 und einem
mit ihr gekoppelten Hebel 20 der auf der Achse 22 drehbar
ist. Durch einen dünnen Nylon-Faden 21 ist der Hebel 20
mit einer Kurvenscheibe 14 verbunden. Die Verbindungsstelle ist Punkt 18. Die Kurvenscheibe ist fest mit dem
Doppelzeiger 15 verbunden und auf der Achse 17 drehbar.
Die Vorspannung des Fadens 21 besorgt die Spiralfeder 16.
Das Fenster 11 ist mit einer Skala 13 versehen. Das Gehäuse 10 ist durch einen Flansch 25 am Dekompressionsmeter
24 angeschlossen. Der Hochdruck-Anschluss erfolgt durch einen Anschluss-Schlauch 26.

Die Bewegung der Bourdon-Feder 19 wird durch ein, um die Achse 22 drehbaren Hebel 20 und ein Nylon-Faden 21 auf die Kurvenscheibe 14 übertragen. Die Kurvenscheibe 14 dreht sich durch das Abwälzen des Fadens 21 um die Achse 17 und überträgt die erwünschte exponentiale Bewegung auf den Doppelzeiger 15. Diese exponentiale Bewegung muss der Druckluftvorrat-Skala entsprechen. Da die Fenster 11 und 12 durchsichtig sind, kann die Deckung der Lage des Doppelzeigers 15 mit der Lage des Zeigers des Dekompressionsmeters 24 verglichen werden. Mit dem Doppelzeiger 15 wird das genaue Ablesen ermöglicht. Beim Tauchgang zeigt der Doppelzeiger 15 den Flaschendruck im Tauchgerät. Während des Tauchgangs sinkt der Doppelzeiger so weit, bis er sich mit dem Zeiger des Dekompressionsmeters 24 deckt. Dann muss die Dekompression beginnen. Während der Dekompression bewegen sich die beiden Zeiger in der Deckung zusammen. Die kleinen Abweichungen der Deckung liefern eine zusätzliche Auskunft, wie der Luftverbrauch des Tauchers von dem angenomennen durchschnittlichen Atemluftverbrauch Q abweicht.

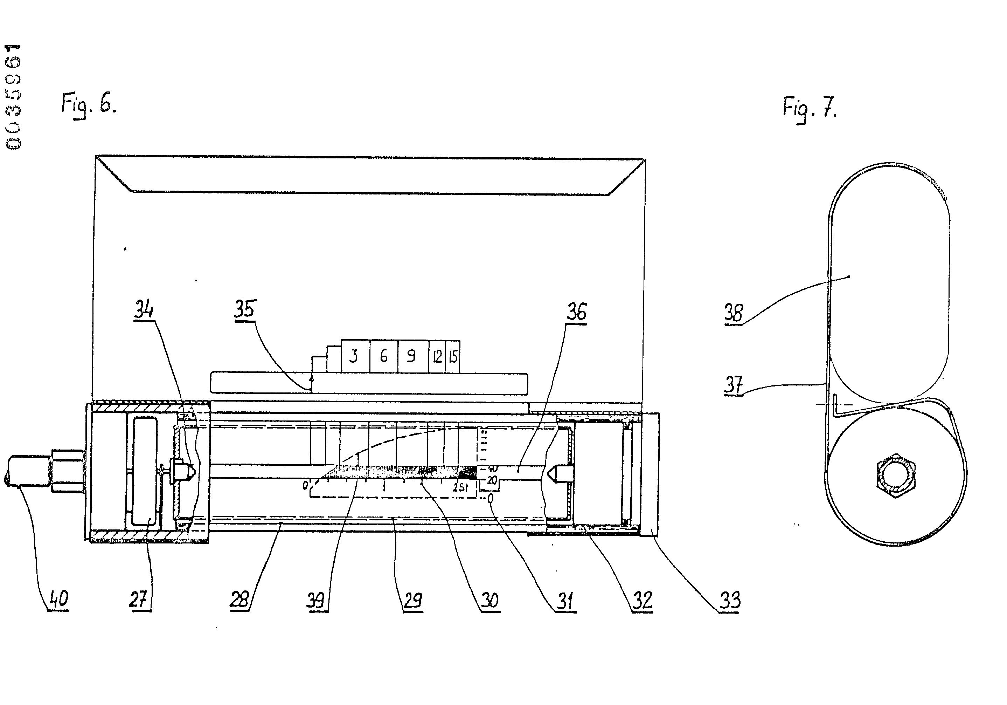

(Fig. 6,7) zeigen den kombinierten Dekompressionsluftvorrat-Anzeiger mit geradem Weg der Dekompressions-Anzeige, bestehend aus dem zylindrischen durchsichtigen Gehäuse 32 mit der, auf dessen Innenseite, angebrachten zylindrischen Blende 28, die eine Zeitskala 30 enthält und mit dem Schlitz 36 versehen ist. Im Gehäuse 32 befinden sich Druckluftmanometer 27 mit einem drehbaren Mitnehmer 34 und Zylinder 29, auf dem die Druckluftvorrat-Kurve 39 und Druckluftvorrat-Skala 31 angebracht sind. Das Gehäuse 32 ist mit dem Verschluss 33 geschlossen und durch die Blech-Halterung 37 mit dem Dekompressionsmeter 38, mit Dekompressions-Anzeige 35, verbunden. Der Hochdruck-Anschluss erfolgt durch einen Anschluss-Schlauch 40.

Die Drehbewegung des Manometers 27 wird durch den Mitnehmer 34 auf den Zylinder 29, mit aufgetragener Druckluftvorrat-Kurve 39, übertragen. Wenn sich der im Schlitz 36 sichtbare Teil der Druckluftvorrat-Kurve 39 auf gleicher Höhe mit der steigenden Dekompressions-Anzeige 35 befindet, wird im Schlitz 36 gleichzeitig der, für die Durchführung der Dekompression notwendige, Druckluftvorrat angezeigt. Die Druckluftvorrat-Skala 31 zeigt ausserdem fortlaufend den Flaschendruck während des Tauchganges an. Die Zeitskala 30 gibt die Länge der Dekompression an. Der Zylinder 29 ist auswechselbar und kann für jeden Flascheninhalt mit passenden Skalen versehen werden.

Die zusätzlichen Informationen über den Anfang der Dekompression, den Luftvorrat während des Tauchgangs und der Dekompression, dem Zeitverlauf der Dekompression und des eigenen durchschnittlichen Luftverbrauches, werden dem Taucher die Berechnungen erspart, erhöhen seine Sicherheit und ermöglichen eine bessere Ausnützung des Luftvorrates. Die einfache Ausführung des Gerätes garantiert
die Zuverlässigkeit. Das zusätzliche aufklebbare Schild
erhöht den Benützungswert von bestehenden Dekompressions-
metern.

- 10 -

<u>Patentansprüche</u>

1. Dekompressionsluftvorrat-Anzeiger für Taucher, der durch Erweitern der Funktion des bestehenden mechanischen Dekompressionsmeters entsteht, dadurch gekennzeichnet, dass eine bestehende Dekompression-Skala des mechanischen Dekompressionsmeters mit einer zusätzlichen, von dem Dekompressions-Vorgang abhängigen, vorausberechneten Druckluftvorrat-Skala erweitert ist, die für jede Lage der Dekompressions-Anzeige den, für die Durchführung der Dekompression notwendigen, Flaschendruck angibt.

2. Dekompressionsluftvorrat-Anzeiger nach Anspruch 1, dadurch gekennzeichnet, dass die Druckluftvorrat-Skala mit dem der Druckluftvorrat-Skala angepassten Druckluft-Manometer gekoppelt ist.

3. Dekompressionsluftvorrat-Anzeiger nach Anspruch 1, dadurch gekennzeichnet, dass die Druckluftvorrat-Skala aus mehreren Skalen für verschiedene Atemgerät-Flascheninhalte besteht.

4. Dekompressionsluftvorrat-Anzeiger nach Anspruch 1, dadurch gekennzeichnet, dass die Druckluftvorrat-Skala mit einer Zeitskala erweitert ist.

5. Dekompressionsluftvorrat-Anzeiger nach Anspruch 1, dadurch gekennzeichnet, dass die Druckluftvorrat-Skala mit den Korrektur-Konstanten A und B erweitert ist.

6. Dekompressionsluftvorrat-Anzeiger nach Anspruch 1, dadurch gekennzeichnet, dass die Druckluftvorrat-Skala aus mehreren parallelen Skalen entsprechend der Memory Zone besteht.

7. Dekompressionsluftvorrat-Anzeiger nach Anspruch 1, dadurch gekennzeichnet, dass die Druckluftvorrat-Skala als zusätzlich aufklebbares Schild ausgeführt ist.

8. Dekompressionsluftvorrat-Anzeiger nach Anspruch 1, und 2, damit gekennzeichnet, dass das Druckluftmanometer aus einem flachen Gehäuse (10) mit den Fenstern (11) und (12) besteht, mit einem Uebersetzungs-Mechanismus versehen ist, von dem die Bewegung mit Hilfe eines Fadens (21) auf die Kurvenscheibe (14) übertragen wird, und wobei die Kurvenscheibe (14) direkt mit dem Doppelzeiger (15) verbunden ist.

9. Dekompressionsluftvorrat-Anzeiger nach Anspruch 1 und 2, dadurch gekennzeichnet, dass die Druckluftvorrat-Skala (31) für jede Lage der Dekompressions-Anzeige den, für die Durchführung der Dekompression notwendigen, Flaschendruck erst dann angibt, wenn sich
die im Schlitz (36) sichtbare, am drehbaren Zylinder (29)
aufgetragene Druckluftvorrat-Kurve (39), auf gleicher
.Höhe mit der steigenden Dekompressions-Anzeige (35) befindet, und dass die Druckluftvorrat-Skala (31) auch
auf dem Zylinder (29) angebracht ist.

Fig. 1.

DRUCK [bar]

ZEIGER

1-2 St

30 min - 1St

0-30 min

Δp

Δt

A

B

2    1    0

3m    6m    9m    DEKOMPRESSIONS-SKALA MIT STUFEN

12m    15m

0

ZEITACHSE DER DEKOMPRESSION [min]

MEMORY ZONE

Fig. 2.

3
4
3,4
7
6
5

9

Fig. 3.

8    9

9

Fig. 4.

Fig. 5.

0035961

Fig. 6.

Fig. 7.

| 3 | 6 | 9 | 12 | 15 |

34   35   36

0   1   25t   20

40   27   28   39   29   30   31   32   33

38

37

**Europäisches Patentamt**

**EUROPÄISCHER RECHERCHENBERICHT**

| EINSCHLÄGIGE DOKUMENTE | | | KLASSIFIKATION DER ANMELDUNG (Int Cl ³) |
|---|---|---|---|
| Kategorie | Kennzeichnung des Dokuments mit Angabe, soweit erforderlich, der maßgeblichen Teile | betrifft Anspruch | |
| A | US - A - 4 197 747 (C.L. KOEHLER) <br> * Spalte 2, Zeilen 40-54 * <br> -- | 1 | B 63 C 11/02 |
| A | US - A - 3 828 611 (R.B. SHAMLIAN) <br> * Spalte 1, Zeilen 44-65 * <br> -- | 1 | |
| A | US - A - 3 861 417 (G.W. ROWE) <br> * ganzes Dokument * <br> -- | 1 | RECHERCHIERTE SACHGEBIETE (Int. Cl.³) <br><br> B 63 C 11/02 <br> G 01 C 13/00 |
| A | BE - A - 625 011 (J. RICHARD) <br> * Ansprüche 1,2; Seiten 7,8 * <br> -------- | 1 | |

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Grunden angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 22.06.1981 | DEBUYZER |

EPA form 1503.1   06.78